# EUROPÄISCHE PATENTSCHRIFT

(11) **EP 0 749 654 B1**
(45) Veröffentlichungstag und Bekanntmachung des Hinweises auf die Patenterteilung: **26.05.1999**
(21) Anmeldenummer: 95910429.0
(22) Anmeldetag: 01.03.1995
(51) Int. Cl.: H04M 1/00, H04M 19/04, H04M 1/02

(54) **KOMPAKT-FERNSPRECHENDGERÄT**
COMPACT TELEPHONE SET
TELEPHONE COMPACT

(30) Priorität: 11.03.1994 DE 4408324
(43) Veröffentlichungstag der Anmeldung: 27.12.1996
(73) Patentinhaber: SIEMENS AKTIENGESELLSCHAFT, 80333 München (DE)
(72) Erfinder: SCHWEITZER, Ralf, D-46397 Bocholt (DE)
(86) Internationale Anmeldenummer: DE9500266
(87) Internationale Veröffentlichungsnummer: WO9524790

(56) Entgegenhaltungen:
- EP-A- 0 178 016
- TELCOM REPORT, Bd. 7, Nr. 2, März 1984 PASSAU (DE), Seiten 141-146, GRESKA ET AL 'SIEMENS MINISET 200 - EIN KOMPAKTFERNSPRECHER FÜR ÜBERALL'
- COMMUTATION & TRANSMISSION, Bd. 12, Nr. 3, 1990 PARIS, Seiten 113-118, VINCENDEAU ET AL 'POSTE FRANCO-ALLEMAND DUO'
- REVIEW OF THE ELECTRICAL COMMUNICATION LABORATORIES, Bd. 28, Nr. 9-10, September 1980 TOKYO (JP), Seiten 863--877, NAEMURA ET AL 'MODEL 701 P TELEPHONE SET'
- REVIEW OF THE ELECTRICAL COMMUNICATION LABORATORIES, Bd. 22, Nr. 3-4, März 1974 TOKYO (JP), Seiten 227-235, TERAI ET AL 'NETWORK REALIZATION FOR THE SMALL SIZE TELEPHONE SET'
- PATENT ABSTRACTS OF JAPAN vol. 14 no. 200 (E-920) ,24.April 1990 & JP,A,02 043868 (OKI ELECTRIC IND CO)

## Beschreibung

Die Erfindung betrifft ein Kompakt-Fernsprechendgerat gemäß dem Oberbegriff des Patentanspruches 1.

Als Kompakt-Fernsprechendgerate werden u. a. solche Fernsprechendgerate bezeichnet, die eine derartige Zweiteilung ihrer Geratestruktur besitzen, daß die wesentlichen Funktionsmodule auf beide Teile verteilt sind.

Aus der DE-Z: Unterrichtsblatter der Deutschen Bundespost Telecom; Jahrgang 36/1983, Nr. 12; Seiten 474 bis 484 ist ein Kompakttelefon Modell "Dallas" bekannt, das die vorstehend genannte zweiteilige Geratestruktur aufweist; es enthält einen Handapparat und eine Ablage für den Handapparat. Der Handapparat ist dabei über ein normiertes Handapparatkabel mit der Ablage verbunden. Über eine in der Ablage angeordnete Anschlußeinheit wird die Verbindung zwischen dem Handapparat und der a/b-Leitung (Teilnehmerleitung, Fernsprechleitung) hergestellt.

Zur schaltungstechnischen Realisierung von Fernsprechfunktionen "Sprechen, Hören, Lauthören, Tonruf, Gespräch übergeben, etc." ist in dem Handapparat des Kompakttelefons ein Großteil der dafür erforderlichen Einrichtungen wie Sprech- und Hörkapsel, Wahltastatur, Sprechschaltung, Steuereinrichtung (z. B. Mikroprozessor) etc. angeordnet, während in der Ablage Einrichtungen wie Leitungsanschaltung mit Verpolungsschutz und Gabelschaltung, Erdschaltung, Tonrufschaltung, Lautsprecher etc. angeordnet sind.

Bei der vorstehend beschriebenen Gerätestruktur sind für die schaltungstechnische Realisierung der genannten Fernsprechfunktionen fünf telefonspezifische Funktionsmerkmale - ein erstes Funktionsmerkmal "Sprache", ein zweites Funktionsmerkmal "Erde", ein drittes Funktionsmerkmal "Ground", ein viertes Funktionsmerkmal "Aus-/Einschalten der Fernsprechfunktion Lauthören" und ein fünftes Funktionsmerkmal "Lautsprecher" - zugeordnet. Für die fünf telefonspezifischen Funktionsmerkmale sind jedoch nur vier Signalleitungen im normierten Handapparatkabel vorhanden. Um die angesprochenen Fernsprechfunktionen mit dem bekannten Kompakttelefon schaltungstechnisch realisieren zu können, wird eine erste Signalleitung von den vier Signalleitungen doppelt belegt. Für diese Doppelbelegung der ersten Signalleitung mit den telefonspezifischen Funktionsmerkmalen sind in dem Kompakttelefon Steuermittel vorgesehen, die der ersten Signalleitung das Funktionsmerkmal "Erde" und das Funktionsmerkmal "Aus/Einschalten der Fernsprechfunktion Lauthören" zuordnen.

Die der Erfindung zugrundeliegende Aufgabe besteht darin, ein Kompakt-Fernsprechendgerät anzugeben, das bei einer zweiteiligen "Ablage/Handapparat"- Gerätestruktur mit verteilt zugeordneten fernsprechendgerätespezifischen Funktionsmodulen eine verbesserte Tonrufsignalisierung und eine bessere Ausnutzung der Leistungsmerkmale bei unveränderter Fernsprechqualität aufweist.

Diese Aufgabe wird ausgehend von dem in dem Oberbegriff des patentanspruches 1 definierten Kompakt-Fernsprechendgerät durch die in dem kennzeichnenden Teil des Patentanspruches 1 angegebenen Merkmale gelöst.

Das erfindungsgemäße Kompakt-Fernsprechendgerät mit einer zweiteiligen "Ablage/Handapparat"- Gerätestruktur weist zur Realisierung von Fernsprechfunktionen "Sprechen, Hören, Lauthören, Tonruf, Gespräch übergeben etc." mehrere Funktionsmodule auf, die verteilt in der Ablage und dem Handapparat des Kompakt-Fernsprechendgerätes angeordnet und über ein normiertes Handapparatkabel mit z.B. vier Leitungen miteinander verbunden sind. Da bei dem Kompakt-Fernsprechendgerät aufgrund der zweiteiligen Gerätestruktur in Verbindung mit dem normierten Handapparatkabel die schaltungstechnischen Voraussetzungen für die Realisierung der Fernsprechfunktionen unzureichend sind, wird erfindungsgemäß eine erste Leitung der vier Leitungen des Handapparatkabels zumindest doppelt ausgenutzt. Die Doppelausnutzung besteht vorzugsweise darin, daß sowohl die Tonrufsignalisierung als auch die Erdesignalisierung auf der ersten Leitung abgewickelt wird. Diese Art der Doppelausnutzung gewährleistet, daß keine Störgeräusche und Impedanzprobleme (wie z. B. bei der Doppelausnutzung der Leitung in bezug auf die Funktionsmerkmale "Erde" und "Lautsprecher") oder aufgrund der niederohmigen Sprechschaltung keine Anwahl- und Umschaltprobleme (wie z. B. bei der Doppelausnutzung der Leitung in bezug auf die Funktionsmerkmale "Sprache und "Tonruf") auftreten.

Darüber hinaus bietet die erfindungsgemäße Doppelausnutzung der Leitung die Möglichkeit, daß auf der selben Leitung auch noch zusätzlich ein Ein-/Ausschaltsignal übertragen werden kann, d. h. die Leitung also dreifach ausgenutzt wird.

Vorteilhafte Weiterbildungen der Erfindung sind in den Unteransprüchen angegeben.

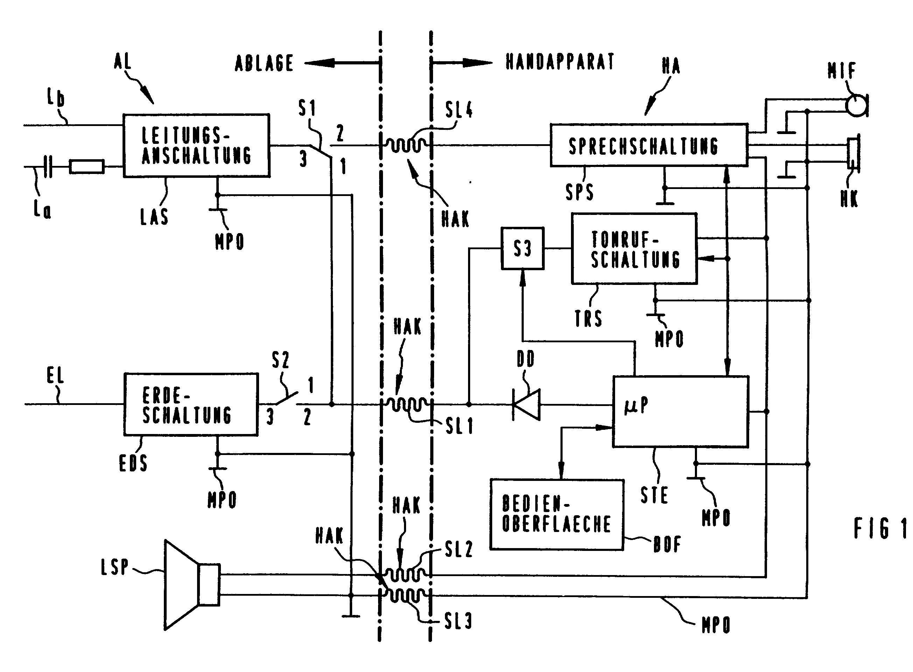

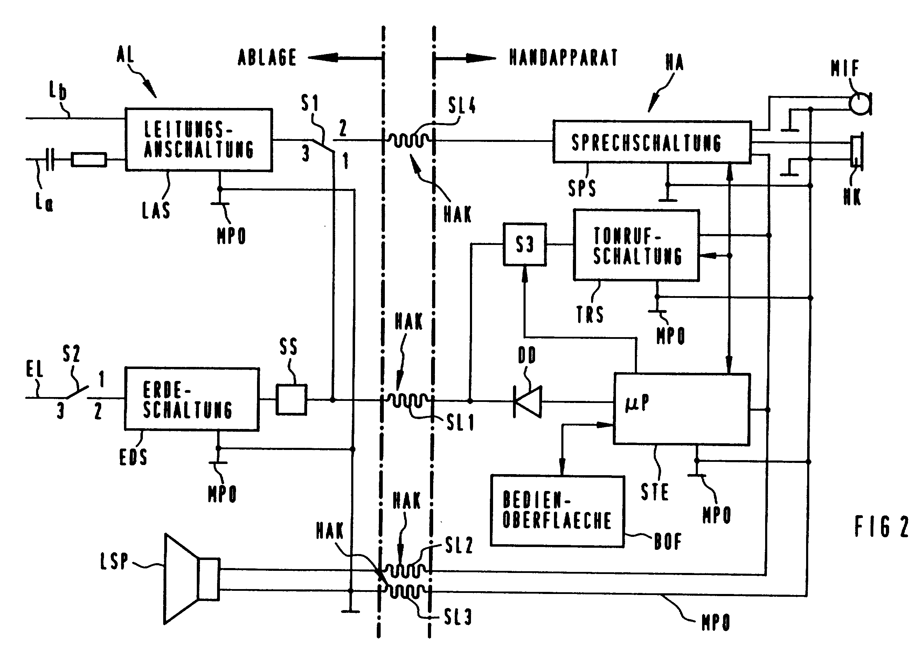

Ein Ausführungsbeispiel der Erfindung wird anhand der Figuren 1 und 2 erläutert. Es zeigen
Figur 1 den prinzipiellen Aufbau eines ersten Kompakt-Fernsprechendgerätes mit einer zweiteiligen Geratestruktur,
Figur 2 ausgehend von Figur 1 den prinzipiellen Aufbau eines zweiten Kompakt-Fernsprechendgerätes mit einer zweiteiligen Gerätestruktur.
Figur 1 zeigt den prinzipiellen Aufbau eines Kompakt-Fernsprechendgerätes mit einer zweiteiligen Gerätestruktur. Das Kompakt-Fernsprechendgerät weist dazu einen Handapparat HA und eine Ablage AL für den Handapparat HA auf. Der Handapparat HA ist über ein Handapparatkabel HAK mit der Ablage AL verbunden. Dieses normierte Handapparatkabel enthält beispielsweise vier Signalleitungen SL1...SL4 für die Signalübertragung zwischen der Ablage AL und dem Handapparat HA.

Zur Realisierung von fernsprechendgerätspezifischen Fernsprechfunktionen (z.B. Sprechen, Hören, Lauthören, Tonruf, Gespräch übergeben etc) sind in der Ablage AL eine Leitungsanschaltung LAS mit einem Verpolungsschutz und einer Gabelschaltung, eine Erdeschaltung EDS und einen Lautsprecher LSP und in dem Handapparat HA eine Sprechschaltung SPS mit einer Hörkapsel HK und einem Mikrofon MIF, eine Tonrufschaltung TRS und eine Steuereinrichtung STE mit zugeordneter Bedienoberfläche BOF angeordnet.

Die Leitungsanschaltung LAS ist eingangsseitig mit einer Fernsprechleitung Lₐ, L_{b} und ausgangsseitig mit einem zu der Gabelschaltung gehörenden Schaltelement S1 verbunden. Liegt der Handapparat HA beim Anschluß der Ablage AL an die Fernsprechleitung Lₐ, L_{b} in der Ablage AL des Kompakt-Fernsprechendgerätes auf ("Fernsprech-Anrufzustand" des Kompakt-Fernsprechendgerätes), so befindet sich das erste Schaltelement S1 in einer Schaltkontaktposition "3 → 1" (Darstellung in Figur 1).

In der Schaltkontaktposition "3 → 1" des Schaltelementes S1 ist die Leitungsanschaltung LAS an eine erste Leitung SL1 des Handapparatkabels HAK angeschlossen und mit einem Schaltkontakt "2" eines zweiten Schaltelementes S2 verbunden. Dieses zweite Schaltelement S2 ist mit einer Erdeschaltung EDS verbunden, die eingangsseitig an eine Erdleitung EL angeschlossen ist. Bei dem in der Ablage AL aufliegenden Handapparat HA ist das zweite, der Erdeschaltung EDS nachgeschaltete Schaltelement S2 - wie das erste Schaltelement S1 - in der Schaltkontaktposition "3 → 1" (geöffnete Schaltkontaktposition), so daß keine Verbindung zwischen der Leitungsanschaltung LAS und der Erdeschaltung EDS besteht.

In dem vorstehend beschriebenen "Fernsprech-Wartezustand" des Kompakt-Fernsprechendgerätes ist das Kompakt-Fernsprechendgerat für den Aufbau einer Telefonverbindung zu einem fernen Fernsprechteilnehmer bereit. Ein Gesprachswunsch eines fernen Teilnehmers wird dem Kompakt-Fernsprechendgerat dabei durch ein Tonrufsignal auf der Fernsprechleitung Lₐ, L_{b} signalisiert.

Über die Leitungsanschaltung LAS, das Schaltungselement S1 und die erste Leitung SL1 gelangt das Tonrufsignal in den Handapparat HA. In dem Handapparat HA wird das Tonrufsignal über eine selbstleitende elektronische Schalteinrichtung S3, z.B. eine Transistorschaltung, der Tonrufschaltung TRS zugeführt. Die Tonrufschaltung TRS erzeugt in Verbindung mit der Steuereinrichtung STE aus dem erhaltenen Tonrufsignal eine fernsprechendgeratspezifische Tonruffolge, die über eine zweite Leitung SL2 des Handapparatkabels HAK dem Lautsprecher LSP zugeführt wird. In dem Lautsprecher LSP wird die Tonruffolge in eine hörbare Tonrufmelodie umgewandelt. Die bei der Erzeugung der Tonrufmelodie aus dem Tonrufsignal beteiligten Schaltungen bzw. Einrichtungen in der Ablage AL bzw. dem Handapparat HA sind dabei in bezug auf ein Massepotential MPO über eine dritte Leitung SL3 des Handapparatkabels HAK miteinander verbunden.

Mit der vorstehend beschriebenen Tonrufsignalisierung kann nun der Gesprächswunsch des fernen Teilnehmers an dem Kompakt-Fernsprechendgerat erwidert werden, indem der Fernsprechteilnehmer an dem Kompakt-Fernsprechendgerat den in der Ablage AL aufliegenden Handapparat HA abnimmt. Bei diesem Abnehmen des Handapparates HA wird die der Leitungsanschaltung LAS zugeordnete Gabelschaltung betatigt. Mit dieser Betätigung der Gabelschaltung werden die Schaltelemente S1, S2 in der genannten Reihenfolge zeitlich nacheinander in Schaltkontaktpositionen "3 → 2" gebracht. Dadurch ist zwischen der Leitungsanschaltung LAS und der Sprechschaltung SPS mit dem nachgeschalteten Mikrofon MIF und der nachgeschalteten Hörkapsel HK über eine vierte Leitung SL4 des Handapparatkabels HAK eine bidirektionale Sprech-/Hörverbindung hergestellt, wobei über die dritte Leitung SL3 des Handapparatkabels HAK wiederum die Verbindung zwischen der Leitungsanschaltung LAS und der Sprechschaltung SPS mit dem nachgeschalteten Mikrofon MIF und der nachgeschalteten Hörkapsel HK in bezug auf das Massepotential MPO hergestellt wird.

Durch entsprechende Maßnahmen an der Bedienoberfläche BOF in Verbindung mit dem dargestellten Aufbau des Kompakt-Fernsprechendgerätes, z.B. eine Lauthörtaste, kann die Fernsprechfunktion "Lauthören" (Leistungsmerkmal) realisiert werden.

In bezug auf eine weitere Fernsprechfunktion "Gespräch übergeben" (Leistungsmerkmal) des Kompakt-Fernsprechendgerätes wird der Erdeschaltung EDS nach entsprechendem Tastendruck an der Bedienoberfläche BOF durch die Steuereinrichtung STE über die erste Leitung SL1 ein Erdesignal zugeführt und der anrufende Teilnehmer somit in eine Warteschleife gelegt.

Im Hinblick auf die doppelte zeitgetrennte Ausnutzung der ersten Leitung SL1 müssen jedoch Vorkehrungen dagegen getroffen werden, daß
(a) bei der Tonrufsignalisierung das Tonrufsignal nicht der Steuereinrichtung STE und
(b) bei der Erdesignalisierung das Erdesignal nicht der Tonrufschaltung
zugeführt wird. Bezüglich des Tonrufsignales - Fall (a) - wird dazu zwischen der Steuereinrichtung STE und der Leitung SL1 in dem Handapparat HA ein elektronischer Richtungsschalter DD, z.B. eine Diode, angeordnet, während bei der Erdesignalisierung - Fall (b) - die selbstleitende elektronische Schalteinrichtung S3 durch die Steuereinrichtung STE gesperrt wird.

Figur 2 zeigt ein weiteres Kompakt-Fernsprechendgerät, bei dem in Abänderung zum Kompakt-Fernsprechendgerät nach Figur 1 das zweite Schaltelement S2 in bezug auf die Erdeleitung EL nicht mehr der Erdeschaltung EDS nachgeschaltet, sondern vorgeschaltet ist. Damit das Kompakt-Fernsprechendgerät nach Figur 2 in bezug auf die Doppelausnutzung der ersten Leitung SL1 einwandfrei funktioniert, ist jedoch ergänzend zum Aufbau des Kompakt-Fernsprechendgerätes nach Figur 1 noch eine Schutzschaltung SS für die Erdeschaltung EDS bei der Tonrufsignalisierung erforderlich. Diese Schutzschaltung SS ist der Erdeschaltung EDS zum Schutz gegen das Tonrufsignal vorgeschaltet.

## Patentansprüche

1. Kompakt-Fernsprechendgerät,
a) mit einer Sprechschaltung (SPS), einer Steuereinrichtung (STE) und einer Bedienoberfläche (BOF), die in einem Handapparat (HA) miteinander verbunden sind,
b) mit einer Leitungsanschaltung (LAS), einer Erdeschaltung (EDS) und einem Lautsprecher (LSP), die in einer an eine Fernsprechleitung (Lₐ, L_{b}) angeschlossenen Ablage (AL) für den Handapparat (HA) miteinander verbunden sind,
c) mit einer Tonrufschaltung (TRS),
d) mit einem Handapparatkabel (HAK), das mindestens vier Leitungen (SL1...SL4) aufweist und an den Handapparat (HA) und die Ablage (AL) anschließbar ist,
**dadurch gekennzeichnet**, daß
e) die Tonrufschaltung (TRS) in dem Handapparat (HA) angeordnet ist,
f) in der Ablage (AL) und dem Handapparat (HA) Schaltmittel (S1, S2, S3, DD) derart mit der Tonrufschaltung (TRS), der Steuereinrichtung (STE), der Leitungsanschaltung (LAS) und der Erdeschaltung (EDS) verbunden sind, daß eine erste Leitung (SL1) des Handapparatkabels (HAK) zumindest für ein auf der Fernsprechleitung (Lₐ, L_{b}) dem Fernsprechendgerät zu übertragendes Tonrufsignal und ein von der Steuereinrichtung (STE) zur Erdeschaltung (EDS) zu übertragendes Erdesignal verwendbar ist,
g) die Schaltmittel (S1, S2, S3, DD) derart ausgebildet sind, daß bei der Tonrufsignalisierung das Tonrufsignal nicht der Steuereinrichtung (STE) und bei der Erdesignalisierung das Erdesignal nicht der Tonrufschaltung (TRS) zugeführt wird.

2. Kompakt-Fernsprechendgerät nach Anspruch 1, **dadurch gekennzeichnet**, daß erste und zweite Schaltmittel (S1, S2) als gabelschaltungsspezifische Gabelschaltkontakte ausgebildet sind, wobei das erste Schaltmittel (S1) der Leitungsanschaltung (LAS) nachgeschaltet und das zweite Schaltmittel (S2) der Erdeschaltung (EDS) vor- oder nachgeschaltet ist.

3. Kompakt-Fernsprechendgerät nach Anspruch 1 oder 2, **dadurch gekennzeichnet**, daß dritte Schaltmittel (S3) als eine selbstleitende elektronische Schalteinrichtung ausgebildet sind, die der Tonrufschaltung (TRS) vorgeschaltet und von der Steuereinrichtung (STE) zur Steuerung der Signalvorgange auf der ersten Leitung (SL1) des Handapparatkabels (HAK) steuerbar ist.

4. Kompakt-Fernsprechendgerät nach einem der Ansprüche 1 bis 3, **dadurch gekennzeichnet**, daß vierte Schaltmittel (DD) als ein elektronischer Richtungsschalter ausgebildet sind, der der Steuereinrichtung (STE) zur Übertragung des Erdesignals auf der ersten Leitung (SL1) des Handapparatkabels (HAK) in Durchlaßrichtung nachgeschaltet ist.

## Claims

1. Compact telephone terminal,
a) having a speech circuit (SPS), a control device (STE) and an operator interface (BOF) which are connected to one another in a handset (HA),
b) having a line connection (LAS), an earthing circuit (EDS) and a loudspeaker (LSP), which are connected to one another in a rest (AL) for the handset (HA), which rest (AL) is connected to a telephone line (Lₐ, L_{b}),
c) having a ringing circuit (TRS),
d) having a handset cable (HAK) which has at least four lines (SL1...SL4) and can be connected to the handset (HA) and to the rest (AL),
characterized in that
e) the ringing circuit (TRS) is arranged in the handset (HA),
f) in the rest (AL) and the handset (HA), switching means (S1, S2, S3, DD) are connected to the ringing circuit (TRS), to the control device (STE), to the line connection (LAS) and to the earthing circuit (EDS) in such a manner that a first line (SL1) of the handset cable (HAK) can be used at least for a ringing signal to be transmitted on the telephone line (Lₐ, L_{b}) to the telephone terminal, and an earthing signal to be transmitted from the control device (STE) to the earthing circuit (EDS),
g) the switching means (S1, S2, S3, DD) are designed in such a manner that the ringing signal is not supplied to the control device (STE) during ringing signalling, and the earthing signal is not supplied to the ringing circuit (TRS) during earthing signalling.

2. Compact telephone terminal according to Claim 1, characterized in that first and second switching means (S1, S2) are designed as hook-circuit-specific hook switching contacts, the first switching means (S1) being connected downstream of the line connection (LAS), and the second switching means (S2) being connected upstream or downstream of the earthing circuit (EDS).

3. Compact telephone terminal according to Claim 1 or 2, characterized in that third switching means (S3) are designed as a self-commutating electronic switching device, which is connected upstream of the ringing circuit (TRS) and can be controlled by the control device (STE) in order to control the signalling processes on the first line (SL1) of the handset cable (HAK).

4. Compact telephone terminal according to one of Claims 1 to 3, characterized in that fourth switching means (DD) are designed as an electronic directional switch, which is connected downstream of the control device (STE), in the forward direction, for transmitting the earthing signal on the first line (SL1) of the handset cable (HAK).

## Revendications

1. Appareil téléphonique compact,
(a) comportant un circuit (SPS) de conversation, un dispositif (STE) de commande et une interface (BOF) homme-machine, qui sont reliés entre eux dans un combiné (HA),
(b) comportant un raccordement (LAS) de ligne, un circuit (EDS) de terre et un haut-parleur (LSP), qui sont reliés entre eux dans un dispositif (AL) de réception du combiné (HA) raccordé à une ligne (Lₐ, L_{b}) téléphonique,
(c) comportant un circuit (TRS) de signal d'appel,
(d) comportant un câble (HAK) de combiné, qui comporte au moins quatre lignes (SL1...SL4) et qui peut être raccordé au combiné (HA) et au dispositif (AL) de réception,
caractérisé en ce que
(e) le circuit (TRS) de signal d'appel est disposé dans le combiné (HA),
(f) dans le dispositif (AL) de réception et dans le combiné (HA), des moyens (S1,S2,S3,DD) de connexion sont reliés au circuit (TRS) de signal d'appel, au dispositif (STE) de commande, au raccordement (LAS) de ligne et au circuit (EDS) de terre, de manière qu'une première ligne (SL1) du câble (HAK) de combiné peut être utilisée au moins pour un signal d'appel à transmettre à l'appareil téléphonique sur la ligne (Lₐ, L_{b}) téléphonique et pour un signal de terre à transmettre du dispositif (STE) de commande au circuit (EDS) de terre,
(g) les moyens (S1,S2,S3,DD) de connexion sont réalisés de telle manière que, lors de la signalisation de signal d'appel, le signal d'appel n'est pas envoyé au dispositif (STE) de commande et, lors de la signalisation de terre, le signal de terre n'est pas envoyé au circuit (TRS) de signal d'appel.

2. Appareil téléphonique compact suivant la revendication 1, caractérisé en ce que le premier moyen (S1) de connexion et le deuxième moyen (S2) de connexion sont réalisés en contacts termineurs spécifiques à un termineur, le premier moyen (S1) de connexion étant monté en aval du raccordement (LAS) de ligne et le deuxième moyen (S2) de connexion étant monté en amont ou en aval du circuit (EDS) de terre.

3. Appareil téléphonique compact suivant la revendication 1 ou 2, caractérisé en ce que les troisième moyens (S3) de connexion sont réalisés en dispositif de commutation électronique autoconducteur, qui est monté en amont du circuit (TRS) de signal d'appel et qui peut être commandé par le dispositif (STE) de commande pour commander les opérations de signalisation sur la première ligne (SL1) du câble (HAK) de combiné.

4. Appareil téléphonique compact suivant l'une des revendications 1 à 3, caractérisé en ce que des quatrième moyens (DD) de connexion sont réalisés en commutateur de direction électronique, qui est monté en aval du dispositif (STE) de commande dans la direction de passage, pour la transmission du signal de terre sur la première ligne (SL1) du câble (HAK) de combiné.
